**Europäisches Patentamt**

**European Patent Office**

**Office européen des brevets**

(19)

(11) Veröffentlichungsnummer: **0 132 452**

**A1**

(12)

# EUROPÄISCHE PATENTANMELDUNG

(21) Anmeldenummer: **83107444.8**

(22) Anmeldetag: **28.07.83**

(51) Int. Cl.⁴: **F 02 C 7/10**

(43) Veröffentlichungstag der Anmeldung:
**13.02.85 Patentblatt 85/7**

(84) Benannte Vertragsstaaten:
**CH DE GB LI NL SE**

(71) Anmelder: **Funk, Harald F., Dr.**
**68 Elm Street**
**Murray Hill N.Y. 07974(US)**

(72) Erfinder: **Funk, Harald F., Dr.**
**68 Elm Street**
**Murray Hill N.Y. 07974(US)**

(74) Vertreter: **Glawe, Delfs, Moll & Partner Patentanwälte**
**Postfach 26 01 62 Liebherrstrasse 20**
**D-8000 München 26(DE)**

(54) **Verfahren und Vorrichtung zur Behandlung heisser Abgase, insbesondere von Gasturbinen.**

(57) Heiße Abgase, insbesondere von einer Gasturbine, werden in im Wechseltakt betriebenen Regeneratoren abgekühlt und mit der so gewonnen Wärme ein unter Druck gesetztes Arbeitsmedium aufgewärmt. Hierdurch wird die Abwärme, im Gegensatz zu üblichen Wärmetauschern auf einem höheren Enthalpieniveau wiedergewonnen, so daß das Arbeitsmedium zur Arbeitsleistung in einer Expansions-Kraftmaschine, z.b. einer Expansionsturbine, eingesetzt werden kann. Die Behandlung in den Regeneratoren zur Übertragung der Wärme auf das Arbeitsmedium kann in vorteilhafterweise mit einer weiteren Behandlung zum Entfernen von auf den Kühlflächen der Regeneratoren kondensierenden Verunreinigungen aus dem Abgas kombiniert werden.

EP 0 132 452 A1

./...

FIG.1

A 35

Verfahren und Vorrichtung zur
Behandlung heißer Abgase, insbesondere von Gasturbinen
-----------------------------------

B e s c h r e i b u n g

## Gebiet der Erfindung:

Die Erfindung bezieht sich auf Verfahren und Vorrichtungen zur Rückgewinnung von Wärmeenergie aus heißen
Gasen wie vorzugsweise von Abgasen aus Gasturbinen, um
den Gesamtwirkungsgrad der Gasturbine, bzw. des Heizungs-
oder Stromerzeugungssystems zu verbessern.

## Vorliegende Erkenntnisse:

In neuzeitlichen Kraftanlagen werden auch Gasturbinen verwandt, die durch Verbrennung von Gasen mechanische
Energie erzeugen, die wiederum zur Gewinnung von Strom genutzt wird.

In den letzten Jahren hat man sich bemüht, den thermischen Wirkungsgrad dieser Gasturbinen zu verbessern, nicht zuletzt wegen der steigenden Kosten von Brennstoffen. Der thermische Wirkungsgrad errechnet sich aus der Temperatur $T_B$ des Gases im Verbrennungsraum und der Temperatur $T_A$ des Gases nach der Entspannung gemäß

$$\eta = \frac{T_B - T_A}{T_B}$$

Z.B. bei einer Betriebstemperatur $T_B = 1,073^{\circ}K$ und einer Austrittstemperatur $T_A = 773^{\circ}K$ ist der thermische Wirkungsgrad $\eta = 27,8\,\%$.

Bemühungen den Wirkungsgrad zu verbessern, zielen meistens darauf ab, die Betriebstemperatur zu erhöhen. Jedoch waren hier dadurch Grenzen gesetzt, daß man ein Material finden und verwenden muß, welches den erhöhten Temperaturbeanspruchungen standhält. Diese sind teurer und außerdem wird die Laufzeit der Turbine gekürzt. Es bestehen daher Zweifel, daß man durch Erhöhung der Betriebstemperatur wesentliche wirtschaftliche Vorteile erreicht.

Andererseits hatten Konstrukteure auch wenig Erfolg, eine niedrigere Austrittstemperatur $T_A$ zu erreichen. Man hat wohl das heiße entspannte Abgas in herkömmlicher Weise im indirekten Wärmeaustausch noch zur Dampferzeugung, oder Aufheizung von Verbrennungsluft genützt, ehe es abgeblasen wurde, auch hat man vorgeschlagen, den Wirkungsgrad der Turbine zu verbessern, indem man das heiße Niederdruckgas in einer Niederdruckturbine noch weiter entspannte, um diese Wärme auch in mechanische Energie zu verwandeln.

Bei diesen Vorschlägen, das heiße Abgas noch zu nutzen, ergeben sich aber auch Umweltschutzprobleme, da diese Gase auch Schadkomponenten mitführen, die durch einen Schornstein an die Atmosphäre abgegeben werden. Die Nachteile bei diesem Abblasen sind die Luftverunreinigung und deren schädliche Wirkung auf die Umgebung, sowie die Vernichtung einer Energie, die man hätte nützen können, schließlich die Notwendigkeit der Erstellung von hohen und teuren Schornsteinen. Der Verlust von wiedergewinnbarer Wärme ist hierbei unvermeidlich, da die Abgase ein gewisses Temperaturniveau haben müssen, um den Zug im Kamin zu gewährleisten und auch eine Kondensation zu vermeiden.

Außerdem geht die latente Wärme des Wasserdampfes verloren, da diese als Bestandteil des Rauchgases mitabgeblasen wird, um die Kondensation und damit verbundene Korrosion zu vermeiden.

Falls die latente Wärme des Wasserdampfes nicht genutzt werden kann, muß der Konstrukteur bei der Berechnung der Energiebilanz den unteren Heizwert einsetzen, statt des oberen Heizwertes bzw. Brennwertes. Die unteren und oberen Heizwerte von Brennstoffen sind in Handbüchern, wie John N. Perry's "ENGINEERING MANUAL" im Verlag von McGraw Hill 1959 angegeben, wie z.B. folgende:

| Gas-Komponente | oberer Heizwert kcal / kg | unterer Heizwert kcal / kg | Differenz in % |
|---|---|---|---|
| Wasserstoff | 33 900 | 28 700 | 18,12 |
| Methan | 13 300 | 11 960 | 11,00 |
| Oktan | 11 400 | 10 650 | 7,10 |
| Methylalkohol gasförmig | 5 700 | 5 050 | 12,90 |

Wie aus diesen Werten hervorgeht, kann bei Wasserstoff 18 % mehr Wärme gewonnen werden, wenn die latente Wärme auch zu nutzen ist; so ähnlich also bei Methan (ca. 11 %) und Methylalkohol (ca. 13 %) und ca. 7 % bei Oktan (Benzin). Bisher wurde der obere Heizwert von Brennstoffen dieser Art kaum genutzt.

Maßnahmen zur Luftreinhaltung bestanden bisher überwiegend im Bau höherer Schornsteine. Höhere Kamine sind aber kostspielig und tragen nichts dazu bei, eine größere Reinheit der Luft zu erreichen und schädliche Emissionen wie $SO_2$, Chlorgas, Phosphoroxyde u.a. zurückzuhalten.

Ein bedeutender Faktor in der Luftverschmutzung ist vor allem die zunehmende Konzentration von gasförmigen Schadstoffen, die sich mit Kondensat verbinden und somit Säuren bilden, wie $CO_2$, $SO_2$, Chlor und Fluor-Gase. In Industriebezirken ist die Konzentration von $CO_2$ in Luft mitunter das 10-fache des normalen Spiegels. Säurebildende Verunreinigungen werden in zunehmendem Maße im Regenwasser gefunden, wobei der pH-Wert vom Normalen (6,9) schon bis auf Werte von 4,0 abgesunken ist. Regenwasser mit einem pH-Wert von 5,5 oder darunter zerstört die Lebewesen im Wasser, schädigt Gebäude, Monumente und wird als Hauptursache des Waldsterbens angesehen.

Ein Vorschlag, die säurebildenden Komponenten aus Abgasen zu binden, ist eine Wäsche mit einer wässrigen Lösung von Lauge, ehe man das Abgas durch eine Esse abgibt. Dabei ist zu bemerken, daß das volle Volumen von Abgasen durch diese Wäsche gehen muß, wobei große Mengen an Wasser verbraucht werden, die manchmal gar nicht zur Verfügung stehen, und darüber hinaus werden große Behälter bzw. Kolonnen benötigt, für die, wegen der erfoderlichen Korrosionsfestigkeit, teures Material gebraucht wird, was zur Erhöhung der Baukosten wesentlich beiträgt. Die danach erforderliche Wasserreinigung

- 6 -                    0132452

stellt ebenfalls ein Problem dar und bewirkt, daß solch eine Laugenwäsche unpraktisch ist.

Man hat auch versucht, die Abwärme des Rauchgases zu nutzen, indem man es durch Wärmeaustauscher schickte, ehe es zur Wäsche ging. Dann hat man das Gas nach der Wäsche im Gegenstrom wieder aufgeheizt, um es durch einen Schornstein abzublasen. Diese Art von Wärmeaustausch hat in diesem Temperaturbereich nur einen niedrigen thermischen Wirkungsgrad. Außerdem wird immer noch ein hoher Schornstein erforderlich sein, weil solche Wäschen keinen hohen Wirkungsgrad aufweisen. Das Problem des Ablassens von Rauchgas hat die Industrieländer in zunehmendem Maße beunruhigt und man hat auch erkannt, daß man durch Erhöhung der Schornsteine das Problem nicht lösen kann.

In dem US-Patent 3 970 524 ist ein System beschrieben, das der Vergasung von festen Abfallstoffen dient und eine Gasreinigung einschließt, so daß verwertbare Gase entstehen und somit kein hoher Kamin zum Ablassen erforderlich ist. Ein Merkmal dieses Patentes ist die Möglichkeit, Gas unter Druck zu verbrennen, um ein Gebläse, das für gewöhnlich bei der Gasreinigung eingesetzt wird, einsparen zu können. Ein anderes Merkmal besteht darin, die Gasrei-

0132452

nigung in mehreren Kammern durchzuführen, wobei schädliche Gase sublimiert bzw. ausgefroren werden und damit von reinen und brauchbaren Gasen getrennt werden.

Eine Schwierigkeit, auf die im US-Patent 3 970 524 nicht hingewiesen wurde, ist die Rückgewinnung von Energie aus heißen Abgasen. Dieses Problem ist allerdings in dem US-Patent 4 126 000 angesprochen, welches die Wiedergewinnung der fühlbaren und latenten Wärme der Gase durch Übertragung auf ein Arbeitsmedium im indirekten Wärmeaustausch in einem herkömmlichen Wärmeaustauscher betrifft.

Jedoch ist die Wirtschaftlichkeit eines indirekten Wärmeaustauschs nicht nur wegen der höheren Kosten der Erstellung, sondern auch wegen des relativ schlechten thermischen Wirkungsgrades gering. Das US-Patent 4 265 088 stellt ein System vor, welches direkten Wärmeaustausch von heißen Rauchgasen mit einem Arbeitsmedium vorsieht, wodurch die Anschaffungskosten reduziert und der thermische Wirkungsgrad erhöht werden.

Zusammenfassung der Erfindung:

Es ist die Aufgabe der Erfindung, die bisherigen Nachteile wirtschaftlicher und technischer Art zu über-

winden und ein verbessertes Verfahren zu schaffen, um den Gesamtwirkungsgrad einer Gasturbine zu erhöhen, wobei gleichzeitig die heißen Abgase gereinigt werden.

Gemäß der Erfindung wird zur Verbesserung des Gesamtwirkungsgrades einer Gasturbine, das relativ heiße Abgas (allgemein zwischen 300°C und 600°C), das Komponenten wie Stickstoff, Kohlendioxid, Kohlenmonoxid, Schwefeldioxid, u.U. Schwefelwasserstoff und gasförmige Kohlenwasserstoffe etc. enthalten kann, in Regeneratoren gekühlt, wobei die Wärme an Feststoffe abgegeben wird, welche eine hohe Wärmekapazität und ein hohes Verhältnis von Oberfläche zu Volumen haben. So werden Schadstoffe festgehalten, d.h. die weniger flüchtigen Komponenten der Abgase festgehalten und die so gereinigten Gase abgegeben, wobei kein hoher Schornstein erforderlich ist. Die weniger flüchtigen Komponenten, also die umweltschädlichen, können dann in bekannter Weise, vorzugsweise durch Sublimieren bzw. Ausfrieren solcher Schadkomponenten, entfernt werden, indem man sie in einer Wäsche trennt oder neutralisiert bzw. auch zum Verbrauch abgibt.

Die Wärme des relativ heißen Abgases der Turbine wird an den Regenerator abgegeben und dann von einem Medium aufgenommen, das im Wechseltakt durch den Regenerator geschickt wird und unter Druck steht oder unter Druck gesetzt wird.

Als Arbeitsmedium kann Wasserdampf oder Druckluft oder ähnliches genommen werden. Das so erhitzte, komprimierte Arbeitsmedium wird genutzt, indem es eine Hilfsturbine oder Gasturbine beaufschlagt, um so den gesamtthermischen Wirkungsgrad der Anlage zu erhöhen.

Wenn Druckluft als Arbeitsmedium aufgeheizt wird, so kann auch ein Teil davon in vorteilhafter Weise als Verbrennungsluft dienen, also in einer Gasturbine oder auch zur Verbrennung in einem Kessel.

Der Wärmeinhalt, der in dem gereinigten Abgas verbleibt - wenn im Überschuß - kann zur Aufheizung von Wasser (oder anderen Medien) genommen werden, um als Dampf oder zur Vorheizung von Kesselwasser oder für Fernwärme u.a. genützt zu werden. Ebenso könnte auch das Abgas von der Hilfsturbine als Wärmequelle eingesetzt werden.

Bei einer Ausführungsform der Erfindung wird das heiße Abgas in Regeneratoren gereinigt, so daß die schwereren Komponenten sublimieren oder kondensieren.

Die Gase werden aber schon gekühlt, ehe sie zur Sublimation gebracht werden, indem Regeneratoren als Wärmeaustauscher dienen und die Wärme an die Füllkörper der Regeneratoren abgegeben wird. Die abgekühlten und gereinigten Gase nehmen einen Teil der Wärme wieder auf, die ursprünglich in den Regeneratoren abgegeben wurde. Die verbliebene Wärmeenergie wird abgezogen, indem sie z.B. von Druckluft übernommen wird. In speziell günstiger Anwendung wird eine Reihe von Regeneratoren eingesetzt, um die Kühlung vorzunehmen und eine andere um die gereinigten Gase im Wechselgang aufzuwärmen.

Ein bemerkenswerter Vorteil der verschiedenen Reinigungssysteme der vorgelegten Erfindung ist der Umstand, daß sie relativ heiße Abgase von Gasturbinen übernehmen können (also bei 300°C und höher), um sie in unschädlicher Weise abzugeben, während die Wärmeenergie nicht verlorengeht. Die Wiedergewinnung der Wärmeenergie in Regeneratoren kann bei einem thermischen Wirkungsgrad von mindestens 90 % vor sich gehen, verglichen mit gewöhnlichem indirekten Wärmeaustausch im Bereich von 50 % bis 60 %. Darüber hinaus wird ein hoher Schornstein auch nicht mehr gebraucht.

Als weiterer Vorteil wird angeführt, daß das vorgelegte Verfahren keine, bzw. nur ein Minimum an Energie verbraucht. Dazu kommt noch zusätzlich ein Vorteil dieser Erfindung durch die, wenn erforderlich, Produkte geliefert werden, die durch Sublimieren bzw. Ausfrieren im Verfahrensgang von den Schadstoffen getrennt und weiterverarbeitet werden, um dann nach einer Wäsche zum Verbrauch oder zur Unschädlichmachung mit einem sehr geringen Bedarf an Wasser zugehen, im Gegensatz zu Systemen, die das volle Volumen des Abgases durch eine Laugenwäsche schicken. Dieser geringe Wasserverbrauch kann mit einem relativ geringen Aufwand geklärt werden. Wesentliche Einsparungen werden erreicht, weil große Einrichtungen zur Wasserwäsche unnötig werden. Die Möglichkeit, kleinere Apparate zu erstellen, ist wesentlich vom Standpunkt der Kosten, vor allem, weil unter Umständen korrosionsfestes Material gebraucht wird. Vor allem muß man bei Laugewäschen erschwerte Korrosionsprobleme berücksichtigen. In dem hier vorgelegten System kann man nicht nur im kleineren Maßstab bauen, sondern auch die korrosionsgefährdeten Stellen einengen. Wenn die Abgase behandelt werden sollen, um Produkte zu liefern - wie reines $SO_2$ - kann man ein Adsorptions- oder Absorptionssystem miteinbeziehen. Reines $SO_2$ kann dann an die chemische Prozen-Industrie abgegeben werden. Solch ein Gebrauch würde dann auch eine Wäsche zum Zweck der Neutralisation erübrigen.

Gasreinigungsmethoden und Apparate, wie im US-Patent Nr. 3 970 524 vorteilhaft beschrieben, können angewandt werden, um schädliche Komponenten zu trennen, so daß weniger flüchtige Komponenten des Abgases durch Sublimation oder Ausfrieren abgeschieden werden. Diese Vorrichtung schließt eine Kombination von Ventilen, verbunden mit Fülltürmen ein, in denen bei tiefen Temperaturen die schwereren Komponenten sublimiert oder ausgefroren werden. Komponenten, die so abgeschieden werden, sind $CO_2$, $H_2S$, $SO_2$, $C_2H_2HCN$, HCl und andere im ähnlichen Bereich der Dampfdrücke. Es soll betont werden, daß diese Art von Gasreinigung grundsätzlich auf physikalischer Basis beruht. Chemische Reaktionen sollten erst eingeleitet werden, nachdem Schadstoffe zur Neutralisation abgetrennt werden, die nur kleine Bruchteile ausmachen.

Kurze Beschreibung der Zeichnungen:

Eine Ausführungsform der Erfindung wird anhand der Zeichnungen beschrieben. Es zeigt:

Fig. 1 ein schematisches Fließbild der vorgelegten Erfindung;

- 13 -                  0132452

Fig. 2 ein schematisches Fließbild einer Gasreinigung von Abgas mit Energierückgewinnung zur Verwendung bei der Ausführungsform nach Fig. 1;

Fig. 3 bis 5 einzelne Einrichtungen zur Gasreinigung und Abwärmeverwertung zur Verwendung in der Ausführungsform nach Fig. 1.

Beschreibung der bevorzugten Ausführungsform:

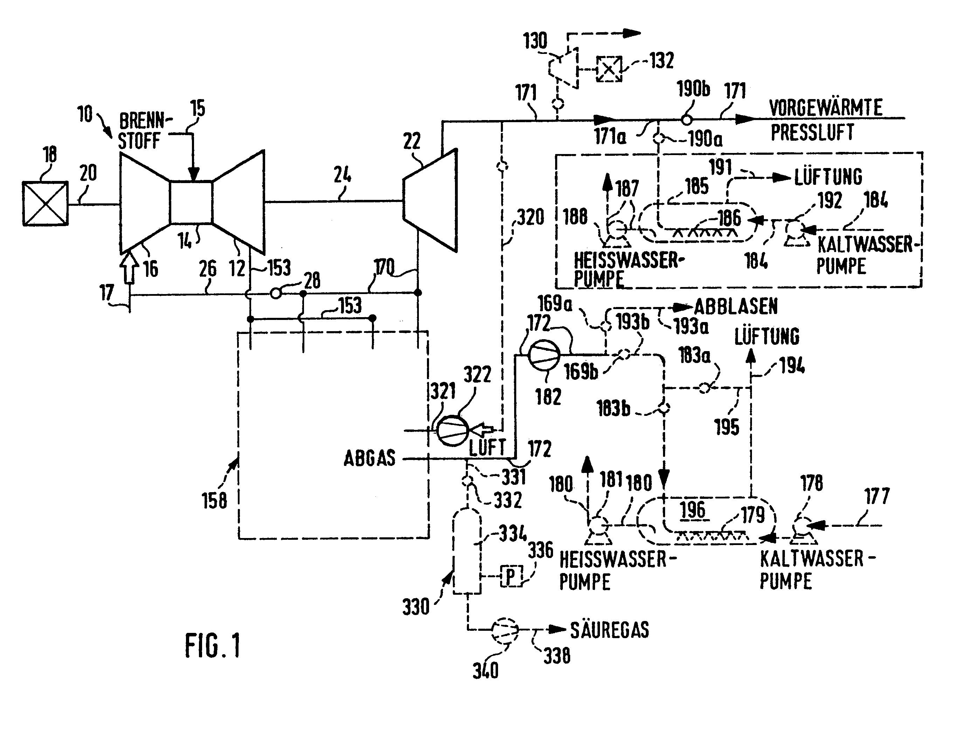

In Fig. 1 ist eine Gasturbinenkraftanlage 10 dargestellt. Diese Kraftanlage 10 kann eine oder mehrere Gasturbinen zur Gewinnung mechanischer Energie zusammenfassen. Sie werden von heißen Abgasen, die aus Brennkammern entsteigen, angetrieben. Die heißen Abgase sind in typischer Weise aus Komponenten wie Stickstoff, Kohlendioxid, Schwefeldioxid, Schwefelwasserstoff, Kohlenmonoxid, Stickoxiden und unverbrannten Kohlenwasserstoffen, etc. zusammengesetzt.

Bei der Ausführungsform nach Fig. 1 umfaßt die Gasturbinenkraftanlage 10, einen Kompressor 16 und eine Expansionsturbine 12, die über eine Brennkammer 14 verbunden sind. Brennstoff wird bei 15 in die Brennkammer 14 aufgegeben. Vorteilhafterweise kann fester, flüssiger oder gasförmiger Brennstoff mit relativ hohem Schwefelgehalt (weil kostensparend) verwendet werden, da der Schwefelgehalt im Abgas in einfacher Weise eliminiert werden kann.

Vorzugsweise wird Sauerstoff oder mit Sauerstoff angereicherte Luft als Oxidationsmittel verwendet. Der Kompressor 16 ist vorgesehen, um die Verbrennungsluft auf Druck zu bringen, so daß die Brennkammer 14 unter Druck arbeitet. Falls vorhanden, wird vorgewärmte Luft in die Brennkammer 14 durch die Leitung 17 aufgegeben. Vorzugsweise wird die Brennkammer unter genügend hohem Druck betrieben, so daß die entstehenden Brenngase wirkungsvoll eine Expansionsturbine 12 treiben und dann mit genügend Druck zur Gasreinigung mit Energierückgewinnung gelangen; falls der Abgasdruck hierfür nicht ausreicht, müßte ein Gebläse nachgeschaltet werden.

Die Abgase, die in der Brennkammer 14 entstehen, werden durch die Expansionsturbine 12 auf fast Umgebungsdruck entspannt und leisten dabei mechanische Arbeit. Diese Energie wird zum Antrieb eines Generators 18, der über die Welle 20 mit der Expansionsturbine 12 verbunden ist, genützt. Üblicherweise ist der Kompressor 16 mit derselben Welle 20 verbunden, um ebenso angetrieben zu werden. Das Gas, das von der Expansionsturbine 12 abgegeben wird, geht über die Gasleitung 153, in die Einrichtung 158 für die Gasreinigung und Energierückgewinnung. Dieses entspannte Gas ist immer noch verhältnismäßig heiß, mit einem Temperaturniveau von ca. 400 bis 600°C. In der Einrichtung 158 werden die heißen Gase gekühlt und kondensierbare und dabei flüchtige von den kondensierenden Komponenten getrennt; anschließend werden die flüchtigen Komponenten wieder aufgeheizt und ein Arbeitsmedium, wie z.B. Druckluft, wird durch die gespeicherte Wärme aufgeheizt.

Die flüchtigen, also nicht kondensierten bzw. reinen Komponenten werden von der Anlage 158 über die Ablaßleitung 172 abgegeben. Das erhitzte Arbeitsmedium wird durch die Heißluftleitung 170 weitergeleitet und wird genutzt, indem eine Niederdruckturbine oder Hilfsturbine 22 angetrieben wird. Diese Hilfsturbine ist mit der Welle 24 und damit auch 20 verbunden und hilft somit, den Generator 18 zu betreiben, wodurch die Gesamtleistung verbessert wird.

Obwohl nur eine Zusatz- bzw. Hilfsturbine gezeigt ist, können an sich mehrere Turbinen in Serien oder Parallelanordnung verwendet werden, wenn z.B. die Hilfsturbine 22 durch Druckluft bei 5 bis 6 bar und einer Temperatur von 760 K angetrieben wird, wobei die Luft auf ca. 1 bar im wesentlichen isentropisch  entspannt wird, kann ein Enthalpiegefälle von 500 bis 800 KJ/kg genutzt werden. Das Abgas der Turbine 22 würde nach der Entspannung aber noch eine Temperatur von ca. 500 K aufweisen.

Diese Heißluft kann aber noch als Verbrennungsluft zur Brennkammer 14 geführt werden oder in den Verbrennungsraum eines Kessels geschleust werden, so kann also der thermische Wirkungsgrad weiter verbessert werden.


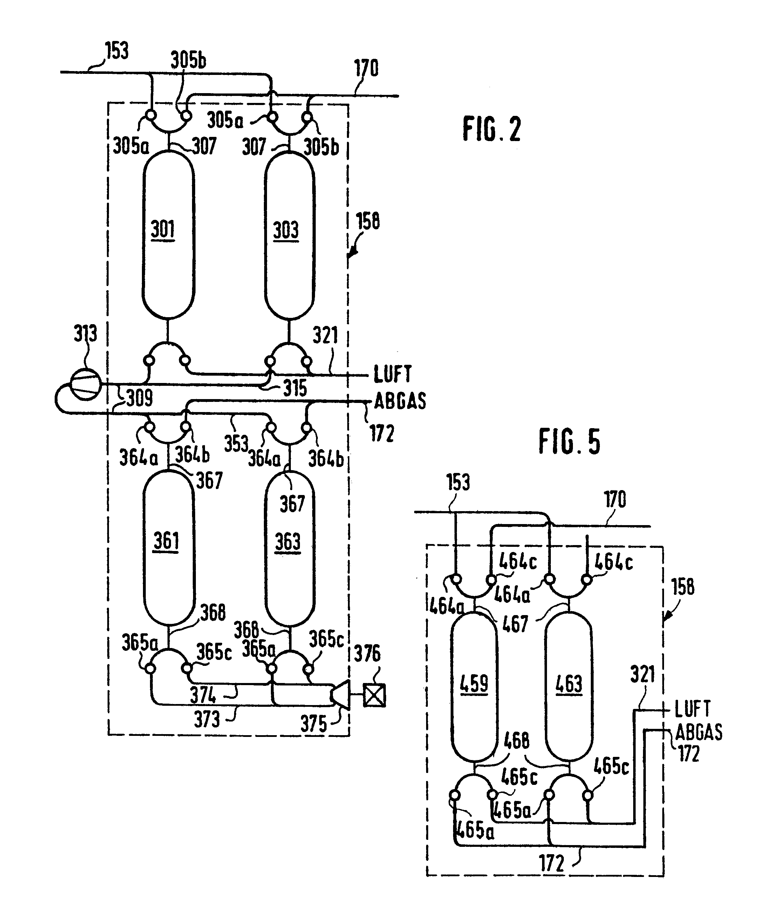

    In Fig. 2 ist die Einrichtung 158 zur regenerativen Gasreinigung und Energierückgewinnung im einzelnen dargestellt, die bei dem in Fig. 1 gezeigten System verwendet werden kann.


    Die Anlage 158 umfaßt eine erste Wärmeaustauschstufe mit Regeneratoren 301, 361 (zwei sind hier gezeigt), die in mehreren Serien angeordnet sind, um die heißen Abgase zu kühlen und schwerere Komponenten festzuhalten, und eine zweite   Wärmetauscherzone (zwei sind hier gezeigt) mit in u.U. mehreren Regeneratoren 303, 363, in der das kalte und gereinigte Abgas wieder erwärmt und mit der eingangs abgegebenen Wärme ein Arbeitsmedium aufgeheizt wird. Das eine und das andere Paar von Regeneratoren 301, 361 bzw. 303, 363 sind abwechselnd die Eingangsstufe bzw. nach Umschaltung die zweite Stufe. So stellen also die Regeneratoren 301, 303 eine erste Austauschstufe dar, indem sie wechselweise entweder die relativ heißen Abgase kühlen bzw. nach Umschaltung die Funktion des Aufheizens eines Arbeitsmediums oder der gereinigten Abgase übernehmen. In ähnlicher Weise funktioniert das Regeneratorenpaar 361, 363, die eine weitere Kühlphase übernehmen bzw. das gereinigte Abgas wieder aufheizen.

Heiße Abgase aus der Primärturbine 12 werden in die Leitung 153 aufgegeben, von der aus die Gasreinigung und Energierückgewinnung 158 beschickt wird. Die Anlage hat mindestens vier Regeneratoren 301, 303, 361, 363, die als Behälter oder Türme mit gleicher Konstruktion und Füllung ausgebildet sind. Die Türme 301 und 303 sind parallel zueinander angeordnet, und ebenso die Regeneratoren 361 und 363. Die Regeneratoren 301, 303 sind jedoch in Serie zu den Regeneratoren 361, 363 angeordnet. Jeder der Regeneratoren 301, 303, 361, 363 ist gleich ausgebildet.

Jeder der Regeneratoren ist gefüllt mit losen Festkörpern, wie Kugeln aus Keramik bzw. Sattelkörper oder ähnliche Formen, aus Kieselsteinen, Stahlschrott etc., zusammengerollten Bändern aus Aluminium oder anderen Feststoffen, die eine große Oberfläche im Verhältnis zum Volumen aufweisen und die die Fähigkeit besitzen, Wärme aufzunehmen und dabei Korrosionsfestigkeit besitzen.

Typischerweise hat die Packung der Regeneratoren ein solches Verhältnis von Oberfläche zu Volumen sowie eine Packungsdichte, so daß sich ca. 3000 bis 6000 $m^2$ Oberfläche pro Kubikmeter ergeben.

Automatisch schaltende Ventile 305a, 305b sind an den oberen Enden der Regeneratoren angebracht, wobei die Zuführleitungen 153 mit den Ventilen 305a verbunden ist. Die Füllstutzen 307 der Regeneratoren 301, 303 verbinden diese mit den Ventilen 305a, 305b. Die Querverbindung 309 schließt an mit der Leitung 315 und verbindet damit die Regeneratoren 301, 303 und schließlich Leitungen 353, die zu den automatischen Schaltventilen 364a, 364b führt und die Regeneratoren 361, 363 mit der Zufuhrleitung 353 verbindet. Die Flansche 368 verbinden die Regeneratoren 361 und 363 mit den automatischen Schaltventilen 365a, 365c. Die Querverbindungen 373, 374 sind an die Ventile 365a, 365c der Regeneratoren 361, 363 angeschlossen und dann vorzugsweise mit einer Expansionsturbine 375 verbunden, welch letztere zur weiteren Kühlung der gereinigten Gase vorgesehen ist.

Eine Expansionsturbine hat den Vorteil, daß sie die Gase wirksamer kühlt, indem die Entspannung, bei der Arbeit geleistet wird, im wesentlichen isentropisch verläuft. Ein Stromgenerator 376 ist mit der Turbine 375 gekuppelt, um die geleistete Arbeit in eine brauchbare Form der Energie zu verwandeln. Eine andere Art der Durchführung (hier nicht gezeigt) wäre es, die Verbindungsleitung 373, 374 mit den Ventilen 365a, 365c anzuschließen und ein System der Schadstoffreinigung miteinzubeziehen. Solch ein·System sollte Schadstoffe durch konventionelle Absorption, Extraktion und/oder Adsorption darstellen.

Ein Absorptionssystem arbeitet mit besserem Wirkungsgrad bei niedrigeren Temperaturen (5° bis -50°C), zumal die Löslichkeit gewisser Gaskomponenten bei niedrigeren Temperaturen generell erhöht ist. In dem hier aber dargestellten System wird das Abgas im Regenerator 361 weiter gereinigt und im Regenerator 363 wieder aufgewärmt, dann über die Leitung 172 abgegeben. Vorgeheizte Druckluft wird durch Leitung 170 , die vom Ventil 305b versorgt wird, abgegeben. Die Druckluft wird durch Leitung 321 beschickt und kommt vom Kompressor 322. Somit wird je nach Schaltung Regenerator 301 bzw. 303 wiederum gekühlt. Ein Kompressor 313 ist zwischen Leitung 309 gesetzt und bringt das Gas auf Druck, um es durch die darauffolgenden Behälter zu schleusen.

Die Gase werden in der Anlage 158 in der Weise behandelt, daß sie in abwechselnden Zyklen in den Regeneratoren 301, 303 gekühlt und in den Regeneratoren 361, 363 wiedererwärmt bzw. gekühlt werden. Während jedem Zyklus wird ein verschiedener Vorgang in den Regeneratoren 301, 303 durchgeführt. Während ein erster Regenerator als Kühlturm dient, worin die heißen Gase im Durchgang sehr schnell abkühlen, wird im anderen gleichzeitig Druckluft aufgeheizt, die durch eine Zufuhrleitung 321 eingespeist wird. In der nächsten Phase werden die Rollen der beiden Regeneratoren 301, 303 vertauscht. Ebenso geschieht das in den Regeneratoren 361, 363. Während der eine der Regeneratoren schwerere Komponenten festhält, indem sich das Gas abkühlt, wird im anderen Regenerator das gereinigte Gas wieder aufgeheizt. In der nächsten Phase werden die Gase in umgekehrter Richtung aufgegeben, so daß die Regeneratoren 361, 363 in umgekehrter Reihenfolge beschickt werden.

So wird also in der ersten Phase einer der Regeneratoren 301, 303 gewählt, um zu kühlen, wobei die heißen, von Staub und Asche befreiten Gase eingeführt werden und das Ventil 305a geöffnet wird, Wenn der Regenerator 301 der Kühlung dient und durch das Ventil 305a beschickt wird, so wird das Ventil 305b, das den Regenerator 303 bedient, geöffnet, während das Ventil 305b, das zum Regenerator 301 gehört und das Ventil 305a, das den Regenerator 303 versorgt, geschlossen ist. Die heißen Abgase fließen durch die Zuleitung 153 durch Ventil 305a in den Regenerator 301, in dem die Gase abkühlen, ehe sie zum Kompressor 313 geschickt werden. Gleichzeitig wird der Regenerator 301 aufgeheizt durch die heißen Gase und wird damit für die nächste Phase, also Aufheizung der Druckluft vorbereitet.

Die komprimierten Gase werden dann durch Leitung 309 weitergeführt die mit Leitung 353 verbunden ist, um so in Regenerator 361 oder 363 zu gelangen. Wenn also der Regenerator 361 der Trennung von Schadkomponenten dient, ist das Ventil 364a geöffnet und ebenso das Ventil 364b, das den Regenerator 363 bedient, während Ventil 364b beim Regenerator 361 und 364b beim Regenerator 363 geschlossen bleiben.

Die verhältnismäßig kühlen und komprimierten Abgase fließen durch Leitung 353, dann durch Ventil 364a in den Regenerator 361, in dem die Gase weitergekühlt und so Schadstoffe durch Sublimation und Kondensation festgehalten werden, während die flüchtigen Komponenten durch den Regenerator gehen. (Dabei wird vorausgesetzt, daß die Regeneratoren 301 und 361 bereits im vorhergehenden Zyklus soweit vorgekühlt wurden, daß die Gase im Regenerator 301 gekühlt und die schwerer flüchtigen Komponenten im Regenerator 361 sublimiert oder ausgefroren werden.) Zur gleichen Zeit wird der Regenerator 361 aufgewärmt, in Vorbereitung auf die Beschickung mit Reingas in der nächsten Phase. Das "Reingas" fließt durch Ventil 365a und weiter durch Leitung 373 durch die Turbine 375 zur weiteren Kühlung. Die Abgase gehen zurück durch die Regeneratoren 301 und 303 in derselben Weise in periodischen Abständen von 4 bis 8 Minuten. Das Druckverhältnis in der Expansionsturbine braucht nur ausreichend zu sein, um ca. 3° bis 5°C an Kühlung zu erreichen, so daß die Regeneratoren in Balance gehalten werden können.

Das nun gekühlte Gas wird durch den Regenerator 363 über den Stutzen 374 und Ventil 365c zurückgeführt  Im Regenerator 363 wird das gereinigte Gas wieder aufgewärmt, während die Füllmasse abkühlt. (Dabei wird vorausgesetzt, daß Regenerator 363 bereits für die Verfahrensgänge vorbereitet wurde.) Die verhältnismäßig kühlen Gase verlassen den Regenerator 363 durch den Füllstutzen 367 und Ventil 364b und werden abgeleitet durch die Rohre 172, die für das reine Abgas vorgesehen sind. Wenn das Abgas noch genügend Wärmeenergie haben sollte - wie später noch geklärt werden soll - wird der Wärmeinhalt noch zurück gewonnen. Sollte das Gas kaum verwertbare Wärmeenergie beinhalten, so wird es abgeblasen.

Es sollte bemerkt werden, daß im Regenerator 361 während der vorhergehenden Phase des Ausfrierens die Schadstoffe zurückgehalten wurden, d.h. der Regenerator ist "beladen". Somit wird nach der Umschaltung zuerst der Regenerator "gereinigt", d.h. daß das Säuregas ausgetrieben wird. Dieses Gasgemisch von "Säuregas" und Reingas und den verdampfenden Komponenten, die erst im Turm kondensiert waren, werden von einem Kompressor bzw. Gebläse 182 angesaugt und über die Leitung 172 und Ventil 169a in eine Sammelleitung 193a aufgegeben. Dies geschieht in einer ersten, kurzen Phase des Zyklus.

Dieses "Säuregas" besteht im wesentlichen aus Komponenten wie $SO_2$ und $CO_2$ mit kleineren Mengen an $H_2S$ und $SO_3$ sowie an deren schädlichen Gasen, u.U. auch $NO_x$. Dieses Gasgemisch wird einer Neutralisation oder weiteren Trennung von Komponenten unterzogen, so daß nur noch inerte und kleine Fraktionen zum Auslaß gelangen. Dieses Reinigen des beladenen Regenerators kann man verwirklichen, indem bei jedem Umschalten auf Reingas eine kurze Periode zur Ablaßleitung 193a und Ventil 169a umgelenkt wird und anschließend das Reingas durch Ventil 169b entweder abgelassen wird durch Leitung 193b, Ventil 183a, Leitung 195 und Auslaß 194 oder wenn das Gas noch verwertbare Wärmeenergie besitzt, dann eingesetzt wird zum Aufwärmen von Wasser oder einem Arbeitsmedium durch einen Wärmeaustauscher 196, wie im weiteren noch geschildet wird.

In einer anderen Ausführungsform der Erfindung kann der Regenerator 361 nach Beladung durch das Ansaugen im Vakuum 330 (wie im gestrichelten Raum der Fig. 1 angezeigt) allein oder in Verbindung mit Reingas im Spülgang zur Ablaßleitung befördert werden, wie vorher beschrieben.

Das Vakuumsystem 330 wird zu Beginn des Aufwärmens im Regenerator 361 und 363 für eine kurze Zeit angesetzt, ehe die Umschaltung der Regeneratoren 301 und 303 geschieht.

Die Ventile sind so gesteuert, daß der Regenerator, der abgesaugt werden soll, ca. 5 Sekunden am unteren Ende schließen und dann nach Öffnen des Ventils 365c noch etwas Spülgas nachkommt, worauf dann das Reingas aber umgelenkt wird, so daß es entweder noch als Nutzwärme gewonnen werden kann oder gleich abgelassen wird. Wenn z.B. heißes Abgas zum Regenerator 303 und Druckluft zum Regenerator 301 strömt, sind die Ventile 305b am Regenerator 301 offen sowie die Ventile 364a und 365a vom Regenerator 363 und 364b wie 365c vom Turm 361. Gleichzeitig sind die Ventile 305a am Turm 301, Ventil 305b am Turm 303, Ventile 364a und 365a am Turm 361 und Ventile 364b und 365c vom Turm 363 geschlossen, um die Steuerung des Systems zu vollenden. Ventil 365c am Turm 361 ist für kurze Zeit (ca. 5 Sekunden) geschlossen. Turm 361 ist von der vorhergehenden Betriebsphase noch beladen. Zur Verdampfung der kondensierten Komponenten unter Vakuum 330 wird die Verbindung zum Turm 361 durch Ventil 364b hergestellt und Reingasausgang 172 durch Ventil 332 freigegeben zur Vakuumleitung 331. Somit fließt das Gas zwischen Turm 361, Vakuumkammer 334 und Kompressor 340.

Die Vakuumpumpe 366 ist in Betrieb um den Druck in der Kammer 334 auf Druckverhältnis von 10:1 zu reduzieren. Sowie die Kammer 334 mit Turm 361 verbunden wird, fällt der Druck im Turm 361, um den reduzierten Druck mit der Kammer 334 auszugleichen, wobei die "ausgefrorenen" sublimierten oder kondensierten Komponenten im Turm 361 verdampfen und als Form von "Säuregas" vom Turm 361 abgezogen werden. Das nun abgezogene Gas wird im Kompressor 340 auf Druck gebracht und in die Säuregasleitung 338 aufgegeben, von wo es weitergeleitet wird in derselben Weise, wie in der Ablaßsammelleitung 193a zum Waschen oder Trennen von Komponenten.

Die Wärmeenergie, die im Turm 303 in einer Phase gespeichert wurde, wird zurückgewonnen, indem Druckluft durch die Zuleitung 321 und Kompressor 322 in den Turm 303 geleitet wird, in dem die Luft aufgewärmt wird, während sie über die Füllkörper streicht und letztere dabei abkühlt, wobei vorausgesetzt ist, daß der Turm 303 im vorhergehenden Zyklus vorgewärmt wurde. Die erhitzte Druckluft geht durch Leitung 307, durch Ventil 305b und Verbindungsleitung 170, um im weiteren Energie abzugeben, z.B. indem sie eine Hilfsturbine 22 antreibt und/oder indem sie als Verbrennungsluft in die Brennkammer 14 durch die Leitung 26 und das Steuerventil 28 aufgegeben wird, wie in Fig. 1 gezeigt, und/oder für andere Zwecke.

Es ist der Strom von kühler Druckluft durch Turm 303, der die Masse für den nächsten Gang soweit kühlt, daß sie für den nächsten Zyklus bereit ist.

Wie aus Fig. 1 hervorgeht, kann der Luftstrom, der durch die Turbine 22 geht und in Leitung 171 gelenkt wird, durch die (gestrichelte) Luftzuführleitung 320 als Luftzufuhr zur Leitung 321 dienen. Wahlweise kann man die Luft nach Entspannung in der Hilfsturbine durch eine oder mehrere weitere Expansionsturbinen 130 (gestrichelt) schicken, um weitere Arbeit leisten zu lassen und einen Stromgenerator 132 (gestrichelt) betreiben lassen.

Die weiter expandierte und somit gekühlte Luft von Turbine 130 wird für gewöhnlich an die Atmosphäre abgegeben, könnte aber auch zur neuerlichen Verwendung weitergeleitet werden, wenn es wünschenswert sein sollte.

Eine weitere Möglichkeit bzw. zusätzliche Verwendung der noch warmen Luft aus der Hilfsturbine ist die Aufwärmung von Wasser oder eines Arbeitsmediums wie in der Anlage 100 gezeigt. So z.B. kann die Anlage zur Wärmerückgewinnung 100 noch mit einem Wärmeaustauscher 185 ausgestattet werden, indem kaltes Wasser über die Zuleitung 184 mit einer Pumpe 192 gespeist wird. Das Wasser wird aufgewärmt, wenn das Ventil 190b gedrosselt oder geschlossen wird und die entspannte Luft aus der Turbine durch die Leitung 171a in den Wärmeaustauscher 185 durch Ventil 190a und die Heizschlangen oder Sprühvorrichtung gelangt. Die gekühlte Luft wird aus dem Wärmeaustauscher 185 durch die Ablaßleitung 191 abgeblasen. Erwärmtes Wasser hingegen wird vom Austauscher 185 durch die Leitung 187 mit Hilfe der Pumpe 188 zu Heizzwecken oder Vorheizung von Kesselspeisewasser u.ä. gepumpt.

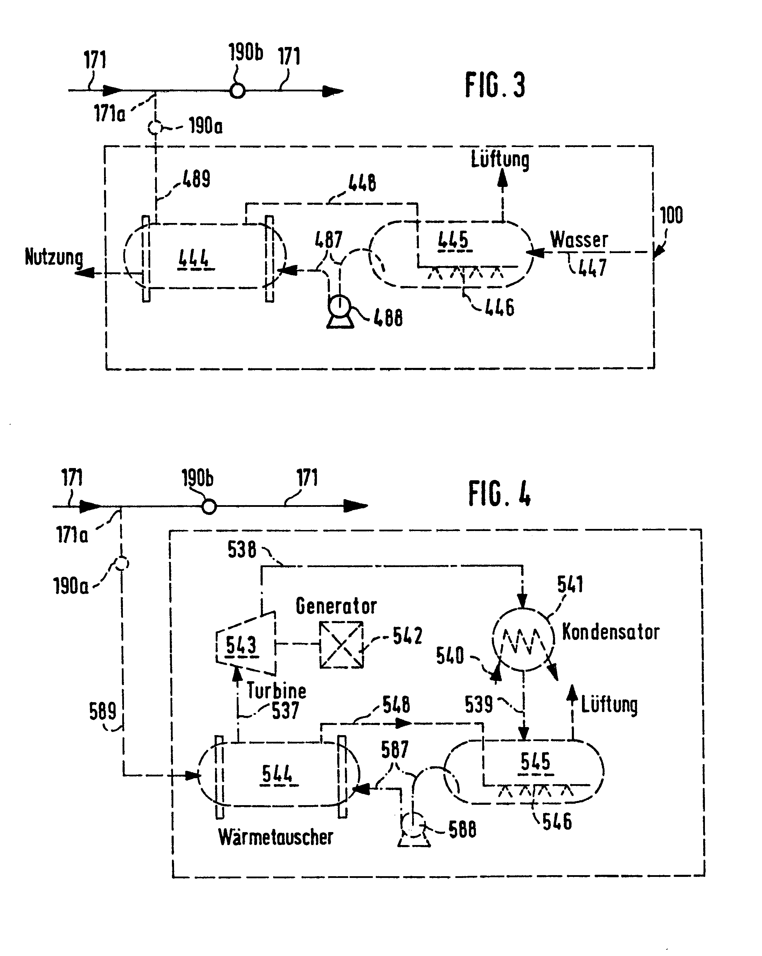

Gemäß einer anderen Ausführungsform nach Fig 3, kann eine Wärmerückgewinnungseinheit 100 zur direkten Beheizung von Wasser oder eines Arbeitsmediums vorgesehen sein. Z.B. können Wärmeaustauscher 444, 445 vorgesehen sein, die mit kaltem Wasser durch die Zuleitung 447 gespeist werden. Das Wasser wird zuerst bei Umgebungsdruck nahezu bis zum Siedepunkt im direkten Wärmeaustausch 445 erwärmt und dann wird das Wasser über Leitung 487 durch eine Pumpe in den Austauscher 444 aufgegeben.

- 29 -

0132452

Das Wasser im Wärmeaustauscher 444 wird dann auf höhere Temperatur und Druck gebracht und so kann es zum Ekonomizer einer Dampfkraftanlage oder auch zur Fernwärmeleitung gepumpt werden oder gleich zur Dampferzeugung übergehen. Die expandierte Luft der Hilfsturbine geht durch den Wärmeaustauscher 444, indem das Drosselventil 190b schließt, dann weiter durch Leitung 171a in den Wärmeaustauscher über Ventil 190a und durch Leitung 489. Von dem Wärmeaustauscher 444 wird die Luft in den Austauscher 445 durch Leitung 448 und die Sprühvorrichtung 445 aufgegeben.

Es soll hervorgehoben werden, daß die Wärmeenergie der entspannten Luft, die aus der Hilfsturbine kommt, zum Aufwärmen von Wasser, aber auch von umlaufenden Arbeitsmedien, die vorzugsweise in Wasser löslich sind, verwendet werden kann. Solch eine Vorrichtung wird in Fig. 4 vorgestellt, wobei die Wärmerückgewinnungsanlage 100 z.B. Wärmeaustauscher 544 und 545 zur Wärmeübertragung von der Warmluft auf ein Arbeitsmedium,das im Kreislauf geführt wird, aufweist.

Eine Turbine 543 und ein Stromgenerator 542 können noch die übertragene Wärmeenergie in nutzbare Energie übertragen. Dazu gehören auch noch ein Kondensator 541 und ein Wärmeaustauscher 545. Somit ist eine Art Routinekreislauf errichtet, der auch im niedrigeren Temperaturbereich noch nützliche Arbeit vollbringt.

Zum besseren Verständnis ist in Fig. 4 die Wärmerückgewinnungseinheit 100 in gestrichelten Umrissen und der Verlauf der Warmluft in strichpunktierten Linien gezeichnet. Indem das Ventil 190b gedrosselt oder geschlossen wird, schickt die Hilfsturbine die entspannte Luft über Ventil 190a und Leitung 589 in den und durch den Austauscher 544 und dann in einen solchen 545 vermittels Linie 548 und einer Sprüheinrichtung 546. Die abgekühlte Luft wird von dem Austauscher 545 wie erforderlich abgeblasen. Das im Kreislauf geführte Arbeitsmedium wird bis nahe an den Siedepunkt erhitzt und in der Leitung 539 zum direkten Wärmeaustausch 545 gebracht, (welch letzterer · aus einem Aufgabekessel in dem ein Arbeitsmedium eingesprüht wird, um in direkten Kontakt mit der Warmluft zu kommen, die von der Hilfsturbine abgegeben wird) so wird die auf diese Weise erhitzte Austauschflüssigkeit von Austauscher 545 durch Leitung 587 mit Hilfe einer Pumpe 588 in den Wärmeaustauscher 544 weiterbefördert.

Im Austauscher 544 wird das Arbeitsmedium weiter durch Warmluft von der Hilfsturbine erhitzt und durch Leitung 537 zu einer Expansionsturbine 543 geführt, wo Dampf Arbeit leistet und einen Generator 542 betreibt. Der dann nach der Entspannung abgekühlte Dampf verläßt die Turbine 453 und wird zu einem Kondensator geführt, wo der Dampf des Arbeitsmediums verflüssigt wird. Das so verflüssigte Arbeitsmedium wird zum Wärmeaustauscher 545 durch die Leitung 539 gepumpt und so wird der Kreislauf wiederholt.

In einem typischen System wie in Fig. 2 gezeigt, wird das heiße Gas (400° - 600°C) im Turm 301 gekühlt und auf ein Temperaturniveau von 40° - 130°C gebracht. Bei dieser Temperatur wird das Gas in 313 komprimiert und zum Turm 361 befördert, wo es weiter abgekühlt wird bis auf eine Temperatur von -100° bis-140°C, wie sie erforderlich ist, um die Komponenten auszufrieren, die eliminiert werden sollen. Die so gereinigten Gase verlassen Turm 361 und werden nach weiterer Kühlung in einer Expansionsturbine 375, im Turm 365 wieder erwärmt auf eine Temperatur, die bis auf ca. 5° bis 10°C gleich der Temperatur ist, bei der das Gas in den Turm 361 eingetreten ist.

Durch Leitung 172 wird das Reingas zur weiteren Abgabe von Wärme oder zum direkten Ablassen abgezogen. Wenn die Reingase den Turm 361 im Temperaturbereich von 40° bis 70°C verlassen, dann würden sie direkt abgeblasen, da nicht genügend Wärmeenergie zur Auswertung mitgeführt wird. Wenn aber noch ca. 70 - 130°C im Reingas gemessen werden, dann kann man den Wärmeinhalt des Gases noch ausnützen.

Die Druckluft, die durch die Zufuhrleitung 321 in den Turm 303 geschickt wird, wird im Turm 303 auf eine Temperatur aufgeheizt, die bis 5° oder 10°C an die Eintrittstemperatur des heißen Gases in den Turm 301 herankommen kann. Wenn aus irgendeinem Grund nicht die gesamte gespeicherte Wärme im Turm 301 oder 303 mit einem Austauschfluidum wie Druckluft wiedergewonnen werden soll, so können Vorkehrungen getroffen werden, um das Reingas durch Turm 303 zurückzuschicken, um die dort gespeicherte Wärme aufzunehmen. Diese Wärmeenergie könnte dann aus dem Reingas wiedergewonnen werden.

Man erkennt, daß die Erfindung ein flexibles System schafft, das eine wahlweise Wiederverwertung der Wärmeenergie, die in Abgasen enthalten ist, erlaubt. Wärmeenergie kann im Austausch mit Druckluft über Türme, die durch ihre Füllmasse Wärme speichern, wiedergewonnen und verwertet werden. Statt dessen oder gleichzeitig kann die Restenergie des relativ kühlen Abgases aus der Leitung 172 zugewinnen, wenn das Gas genügend aufgewärmt wurde und auf ein Temperaturniveau kommt, bei dem es sich lohnt, noch nutzbare Wärme wirksam zurückzugewinnen. Wenn das nicht durchführbar ist, kann man das Reingas ablassen.

Allerdings könnte man, wenn das Abgas in einem Temperaturbereich von 70° bis 130°C anfällt, noch dessen Wärme verwerten. So wird in Fig. 1 gezeigt, wie das Reingas durch Ventil 169b in die Leitung 193b und durch Ventil 183b in den Wärmeaustauscher 196 geht und dort in Schlangen oder durch Einsprühen die Restwärme abgibt, ehe es durch die Ablaßleitung 194 als kühles Gas abgeblasen wird. In diesem Fall wäre es zweckmäßig, das Gas noch in die Leitung 172 bei einer Temperatur aufzugeben, die noch eine Verwertung der Wärme zuläßt.

Daher ist es auch zweckmäßig, den Kompressor ohne den üblichen Nachkühler einzusetzen, zumal die Erwärmung bei der Kompression als nutzbare Wärme vom Abgas übernommen werden kann. Kaltes Wasser wird in dem Austauscher 196 über Leitung 177 und einer Pumpe 178 aufgegeben, um die Restwärme des Abgases zu übernehmen und dann wird das erwärmte Wasser vom Behälter 196 über die Leitung 180 und Pumpe 181 weiterbefördert.

Es soll aber angemerkt werden, daß der Wärmeinhalt des Abgases noch benutzt werden kann, um andere Flüssigkeiten, Luft oder Gase aufzuheizen oder zum Erwärmen eines in Wasser unlöslichen Arbeitsmediums. Dieses Arbeitsmedium kann im Kreislauf geführt werden oder zur Aufwärmung anderer Medien. Die Restwärme in den Türmen 301, 303, also der Teil der Wärme, die nicht vom Reingas aufgenommen wurde, wird von einem Austauschmedium, entweder Druckluft oder einem anderen Gas abgeführt. Die so aufgeheizten Medien, die die Türme über Leitung 170 verlassen können, werden dann genützt, wie vorher geschildert.

Der nächste Gang ist ähnlich dem eben beschriebenen, nur daß Turm 303 den Dienst übernimmt, um das Abgas zu kühlen, während Turm 301 das Aufheizen der Druckluft besorgt. Nach jeweils einer Phase wird z.B. nur der Turm 301 im aufgeheizten Zustand sein, während der Turm 303 abgekühlt ist, weil seine Wärme an die kühlende Druckluft abgegeben wurde. Ehe die heißen Abgase über die Zuleitung 153 durch Ventil 305a in den Turm 303 aufgegeben werden, aber nachdem die Ventile 305a, 305b, 364a, 364b 365a und 365c so gestellt wurden, daß Gas in der folgenden Weise durch die Türme 303, 363 und 361 fließt und schließlich Druckluft durch Turm 301 geschleust wird, wird das Ventil 365c am Turm 361 vorübergehend geschlossen (bis zu 5 Sekunden) und stellt die Zufuhr zu Turm 361 ab, während am oberen Ende die im Turm ausgefrorenen oder kondensierten Komponenten im Vakuum abgesaugt werden und so der Turm freigemacht wird für die Beschickung von Reingas; gegebenenfalls kann auch mit etwas Spülgas nachgespült werden. Dann öffnet sich wieder das Ventil 365c von Turm 361, und heißes Abgas wird durch Ventil 305a in den Turm 303 geleitet, wo sich die Gase abkühlen, während sich die Masse der Feststoffe in diesem Turm aufheizen. Dann werden die Gase übergeleitet 315 zum Kompressor (oder Gebläse) 313, in dem sie auf Druck gebracht werden. Die komprimierten Gase werden durch die Leitungen 309 und 353 in den Turm 363 geführt, wo Schadstoffe und Schwerkomponenten festgehalten werden, ehe das Reingas zur weiteren Kühlung in die Expansionsturbine geschickt werden. Es soll hier festgehalten werden, daß nun der Turm 361 aufgewärmt wurde nach dem Durchgang der Gase, die vom Kompressor beschickt wurden, während der Turm 363 abgekühlt wurde, nachdem unterkühltes Reingas beaufschlagt wurde. Die relativ kühlen Abgase fließen durch Leitung 353 zum Ventil 364a in den Turm 363, in dem die gasförmigen Komponenten weiter abgekühlt werden, wobei die Schwerkomponenten sich als Film an den

Füllkörper ablagern. Im Dauerbetrieb herrscht in jedem Turm ein Temperaturgefälle an der Heißgaseintrittstemperatur am oberen Ende und der Austrittstemperatur am unteren Ende.

Nach diesem Vorgang werden die Reingase, die den Turm 363 verlassen, durch die Turbine 375 geschickt, wo sie noch unterkühlt werden und dann zum Turm 361 zur Aufwärmung gelangen. Die gereinigten Gase werden über Leitung 172 zur weiteren Verarbeitung, Wärmerückgewinnung bzw. zum Ablassen abgegeben. Gleichzeitig wird Druckluft in den Turm 301 gelassen, um die dort gespeicherte Wärme aufzunehmen.

Die Heißluft aus dem Turm 303 gelangt über die Leitung 170 zur Hilfsturbine 22, um hier die Wärmeenergie in mechanische zu wandeln. Über die Heißluftleitung 26 wird auch Heißluft in die Brennkammer 14 eingeblasen oder kann auch für andere Heizzwecke abgeleitet werden.

Es ist auch bemerkenswert, daß die Umschaltung der Heißluft zwischen den Türmen 301 und 303 kurze Unterbrechung (Bruchteile einer Sekunde) ergeben kann, was sich auf den Betrieb der Hilfsturbine 22 auswirken könnte. Um einen gewissen Schock auszugleichen, erscheint es zweckmäßig, die Heißluftturbine mit einem Schwungrad auszustatten.

Der Einsatz von Regeneratoren zum Zweck der Kühlung der Abgase, die von der Gasturbine abgegeben werden und zur Gasreinigung sowie zur Energierückgewinnung, ehe die Gase an die Atmosphäre gelangen, erhöht den gesamten thermischen Wirkungsgrad der Gasturbine, indem Wärmeaustauscher eingesetzt werden, die einen thermischen Wirkungsgrad von mehr als 90 % aufweisen, während die Konstruktion vereinfacht wird und die Anschaffungskosten gesenkt werden können. Die Anlagekosten können weiterhin reduziert werden, indem eine Gasreinigung und Wiedergewinnung von Wärmeenergie wie Anlage 158 erstellt werden, wobei nur 2 Türme eingesetzt werden, die einen zweifachen Dienst versehen.

Ein jeder Turm ist geteilt, wobei der obere und untere Teil voneinander unabhängige Funktionen ausführen. Während also der obere Teil im ersten Gang gekühlt wird, indem die Wärme von Druckluft aufgenommen wird, und den unteren Teil gekühltes Reingas durchstörmt.

Die Kühlphase der heißen Abgase wird im oberen Teil des zweiten Turms durchgeführt und die Gasreinigung im unteren Teil. Die Kondensate und Sublimate werden aus dem unteren Teil des zweiten Turms abgezogen beim Beginn der nächsten Phase, indem Reingas nachgeschoben wird.

Mit geringfügigen Änderungen des Systems der Fig. 1 ist es ebenso nützlich zur Wärmerückgewinnung aus heißen Abgasen, siehe Fig. 5, wie es z.B. bei der Verbrennung reiner Brennstoffe wie Methanol oder reinem Naturgas entsteht. Solch ein Gas bedarf keiner Reinigung und könnte von der Gasturbine 12 zu einer Anlage für Energierückgewinnung 153 geführt werden, wo keine Gastrennung erfolgt. Es würden also die Regeneratoren 459 und 463 in solch einem Fall als sehr effektive Wärmeaustauscher dienen, um die Wärmeenergie der heißen Abgase zurückzugewinnen.

Dieses Konzept ist dargestellt in Fig. 5 und funktioniert so, daß die zwar reinen, aber heißen Verbrennungsgase bei nahezu atmosphärischem Durck die Primärturbine 12 verlassen und über eine Zuleitung 153 in die Türme 459, 463 wechselweise eingehen, wobei das heiße Abgas die Wärmekapazität an die Füllkörper in den Türmen abgibt und vorzugsweise bis auf ein Temperaturniveau abgekühlt wird, das etwas über der Temperatur liegt, bei dem der Partnerturm gleichzeitig mit Druckluft durchströmtwird. Die Wärmeenergie im anderen Turm (entweder 459 oder 463) - vorausgesetzt, daß dieser Turm in der vorhergehenden Phase mit heißem Abgas beschickt wurde - wird somit in verwertbarer Form wiedergewonnen. Ein erster Schritt von diesem Gang ist durchgeführt, indem die Ventile 464a, 465a am oberen und unteren Ende des Turmes 459 öffnen und ebenso die Ventile 464c, 465c an den Enden des Turmes 463. Die heißen Abgase werden durch die Zuleitung 153 durch Ventil 464a zum Turm 459 geführt, in welchem das Gas gekühlt wird und dann diesen Turm durch Ventil 465a verläßt und in der Leitung 172 abgeführt wird. Wie gezeigt und besprochen - siehe Fig. 1 - kann dann das abgekühlte Gas entweder abgelassen werden oder noch gebraucht werden, um die Restwärme zu verwerten.

Ebenso soll angeführt werden, daß die Abgase, während sie durch den Turm 459 gehen, abkühlen, damit die Füllkörper aufwärmen. Die Wärme, die somit im Turm gespeichert ist, wird dann entnommen, wenn ein kühleres Arbeitsmedium wie Druckluft durch die Zuleitung 321 und Kompressor 322 durch den Turm 463 geschleust wird. Wobei vorausgesetzt wird, daß Turm 463 bereits im vorhergehenden Arbeitsgang von heißem Abgas beschickt wurde.

Der Strom von Druckluft kühlt die Füllkörper des Turmes 463 und wird dabei selbst erwärmt. Dabei wird der Turm 463 für den nächsten Arbeitsgang vorbereitet. Die aufgeheizte Druckluft kann dann in einer Hilfsturbine, wie früher beschrieben, Arbeit leisten. Auch kann ein Teil der vorgewärmten Luft in die Brennkammer der Gasturbine geführt werden. Die nach dem Durchgang entspannte Luft kann aber weiterhin verwendet werden, indem ein Arbeitsmedium die Restwärme übernimmt und in einem RANKINE-Kreislauf eine Turbine betreibt, die wiederum Kraft abgibt, um einen Generator zu betreiben, wie in den Fig. 1, 3 und 4 illustriert.

Patentansprüche
----------------------------------

1.    Verfahren zum Behandeln von heißem Abgas, insbesondere von einer Gasturbine, bei dem in aufeinanderfolgenden wechselnden Phasen das Abgas durch die vorgekühlte Füllung eines Regenerators (301, 303) geleitet
und dadurch gekühlt und gegebenenfalls von an der Füllung
kondensierenden Verunreinigungen befreit wird, und anschließend ein Nutzgas in Gegenrichtung durch den Regenerator (301, 303) geleitet und dadurch auf annähernd
die ursprüngliche Temperatur des Abgases erhitzt wird,
dadurch  g e k e n n z e i c h n e t ,  daß das Nutzgas
ein Arbeitsmedium ist, das mit erhöhtem Druck in den Regenerator (301, 303) geleitet und/oder im Regenerator
auf erhöhten Druck gebracht wird und anschließend zur
Arbeitsleistung in einer Expansions-Arbeitsmaschine,
insbesondere einer Expansionsturbine (22), verwendet wird.

2.    Verfahren nach Anspruch 1, dadurch  g e k e n n -
z e i c h n e t ,  daß das Arbeitsmedium komprimierte Luft
oder Wasserdampf ist.

3.     Verfahren nach Anspruch 1, dadurch g e k e n n -
z e i c h n e t ,  daß die Druckerhöhung des Arbeitsmediums im Regenerator (301, 303) durch Verdampfen eines
Arbeitsmediums wie Wasser erfolgt.


4.     Verfahren nach Anspruch 1, dadurch g e k e n n -
z e i c h n e t ,  daß zwei oder mehrere Regeneratoren
(301, 303) abwechselnd im Gegentakt betrieben werden.


5.     Verfahren nach einem der Ansprüche 1 bis 4,
dadurch g e k e n n z e i c h n e t ,  daß ein steuerbarer Teil des Arbeitsmediums der Expansions-Kraftmaschine
(22) und der Rest des Arbeitsmediums als vorgewärmte Verbrennungsluft einer das Abgas erzeugenden Brennkammer (14)
zugeführt wird.


6.     Verfahren nach einem der Ansprüche 1 bis 5,
dadurch g e k e n n z e i c h n e t ,  daß in einem
ersten Regenerator (301, 303), oder einem ersten Teil
eines Regenerators, wechselweise die Abkühlung des Abgases auf eine Abblastemperatur und die Erhitzung des
Arbeitsmediums unter Druck erfolgen, und daß in einem
zweiten Regenerator (361, 363), oder einem zweiten
Teil des Regenerators, wechselweise eine weitere Abkühlung des Abgases auf eine zum Kondensieren oder Ausfrieren der Verunreinigungen ausreichend tiefe Temperatur, und, nach Austreiben der Verunreinigungen aus dem Regenerator (361, 363), die Wiedererwärmung des Abgases auf die Abblastemperatur erfolgt.

7.    Vorrichtung zur Durchführung des Verfahrens nach Anspruch 1, mit einer heißes Abgas erzeugenden Einrichtung (10), insbesondere einer Gasturbine (12), und mindestens zwei im Wechseltakt betriebenen Regeneratoren (301, 303), von denen jeder als ein Behälter mit einer Füllung mit hoher spezifischer Oberfläche und hoher Wärmekapazität besteht, sowie umschaltbaren Leitungen (26, 153, 170) zum abwechselnden Durchleiten des Abgases durch einen der Regeneratoren (301, 303) und eines aufzuheizenden Nutzgases in entgegengesetzter Richtung durch den jeweils anderen Regenerator (301, 303), dadurch g e k e n n z e i c h - n e t , daß eine Einrichtung (322) zum Beaufschlagen des Nutzgases mit erhöhtem Druck vor seinem Eintritt in den jeweiligen Regenerator (301, 303) und/oder im Regenerator (301, 303) vorgesehen ist, und daß die Nutzgasaustrittsleitung (170) von jedem Regenerator (301, 303) an eine Expansions-Kraftmaschine (22) angeschlossen ist.

8.    Vorrichtung nach Anspruch 7, dadurch g e k e n n -
z e i c h n e t , daß außer den im Wechseltakt betriebenen
Regeneratoren (301, 303) zum Abkühlen des Abgases und aufheizen des Nutzgases zwei weitere, im Wechseltakt betreibbare Regeneratoren (361, 363) vorgesehen sind, deren eines
Ende über eine Expansionsturbine (375) verbunden ist und
deren andere Enden wechselweise mit dem Abgasauslaß eines
der ersten Regeneratoren (301, 303) bzw. mit einer Abblasleitung (172) verbindbar sind.

9.    Vorrichtung nach Anspruch 6, dadurch g e k e n n -
z e i c h n e t , daß an die Abgasleitung (171) der Expansions-Kraftmaschine (22) weitere Einrichtungen (185, 444,
445; 544, 543) zur Wärmerückgewinnung angeschlossen sind.

10.    Einrichtung nach einem der Ansprüche 6 bis 9,
dadurch g e k e n n z e i c h n e t , daß von der Abgasleitung (171) der Expansions-Kraftmaschine eine Rückführleitung (320) zum Druckerzeuger (222) für das Arbeitsmedium vorgesehen ist.

11.    Vorrichtung nach einem der Ansprüche 6 bis 10,
dadurch g e k e n n z e i c h n e t , daß an die Rein-
gas-Abblasleitung (172) der Regeneratoren (301, 303, 361, 363, 459, 463) weitere Einrichtungen (196) zur Wärmerückgewinnung angeschlossen sind.

FIG. 1

0132452

FIG.2

FIG.5

## FIG. 3

171 190b 171

171a

190a

489 448

Lüftung

100

Nutzung

444

487 445 Wasser

447

488 446

## FIG. 4

171 190b 171

171a

190a

589

538

Generator

541

542

543

Kondensator

540

Turbine

537

539 Lüftung

548

587

544

545

Wärmetauscher

588 546

**Europäisches Patentamt**

**EUROPÄISCHER RECHERCHENBERICHT**

**0132452**
Nummer der Anmeldung

EP 83 10 7444

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| D,X | US-A-4 265 088 (FUNK) <br><br> * Figuren 2,3; Spalte 13, Zeilen 6-21; Spalte 14, Zeile 23 - Spalte 15, Zeile 60 * <br><br> --- | 1-3,5, 7-11 | F 02 C 7/10 |
| X | GB-A- 648 103 (MACLEISH SMITH) <br><br> * Seite 4, Zeilen 22-91; Figur 1 * <br><br> --- | 1,2,4-7 | |
| D,A | US-A-3 970 524 (FUNK) <br> * Spalte 6, Zeile 34 - Spalte 7, Zeile 42 * <br><br> --- | 1-4,7 | |
| A | GB-A- 959 336 (PUNCOCHAR et al.) <br> * Insgesamt * <br><br> --- | 1-31 | RECHERCHIERTE SACHGEBIETE (Int. Cl. ³) |
| A | GB-A- 678 674 (SHELL) <br> * Insgesamt * <br><br> --- | 1 | F 02 C |
| A | GB-A- 453 769 (MARTINKA) <br><br> --- | | |
| A | EP-A-0 003 980 (MBB) <br><br> --- | | |
| D,A | US-A-4 126 000 (FUNK) <br><br> ----- | | |

Der vorliegende Recherchenbericht wurde für alle Patentansprüche erstellt.

| Recherchenort <br> DEN HAAG | Abschlußdatum der Recherche <br> 05-04-1984 | Prüfer <br> MC GINLEY C.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 R2